Europäisches Patentamt

European Patent Office

Office européen des brevets

(11) Publication number: **0 399 962**

**A1**

## EUROPEAN PATENT APPLICATION

(21) Application number: **90830218.5**

(22) Date of filing: **18.05.90**

(51) Int. Cl.5: **A47F 8/00, G05B 19/35**

(30) Priority: **22.05.89 IT 2058289**

(43) Date of publication of application:
**28.11.90 Bulletin 90/48**

(84) Designated Contracting States:
**AT BE CH DE DK ES FR GB GR LI LU NL SE**

(71) Applicant: **Marinosci, Giovanni**
**Via Massimo D'Azeglio, 35**
**I-20034 Giussano (Milano)(IT)**

Applicant: **Como, Ferdinando Luigi**
**Via Milano, 173**
**I-20133 Desio (Milano)(IT)**

(72) Inventor: **Marinosci, Giovanni**
**Via Massimo D'Azeglio, 35**
**I-20034 Giussano (Milano)(IT)**
Inventor: **Como, Ferdinando Luigi**
**Via Milano, 173**
**I-20133 Desio (Milano)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Dress dummy for displaying dress and clothing articles.**

(57) A dress form or "dummy " for displaying cloth articles comprises a plurality of movable parts which can perform corresponding programmed independent movements so as to dynamically display a cloth article supported on the form,the form substantially comprising a trunk pivotably mounted on the bottom portion of the form body and provided with arms and forearms,and a head adapted to perform timed movements as driven by driving elements controlled by a programmable electronic circuit,the trunk being moreover removably mounted on the bottom portion of the form body which,in turn,is rotatably mounted on a pedestal supporting the dress form.

Fig.1

## BACKGROUND OF THE INVENTION

The present invention relates to a dress form or "dummy" for displaying cloth articles,which is provided with a plurality of independently movable form parts which are driven in a programmed way so as to perform corresponding individual movements.

As is known,clothing articles are usually displayed in shops and the like on displaying forms or dummies.

Known cloth article displaying forms are usually of a static type,i.e they are exclusively provided with top limbs articulated to a trunk.

These forms,in particular,are provided with fixed-position arms and head which positions are preset by a salesman depending on contingent requirements.

Thus,the visual attractiveness at the shop window place,even if the form is properly preset,is rather poor, because of the mentioned static nature of the form.

There are indeed also known dress forms in which the legs can be driven and/or displaced:however this movement is obtained by means of outer driving means to which the form legs are suitably connected.

## SUMMARY OF THE INVENTION

Accordingly,the aim of the present invention is to overcome the above mentioned drawback,by providing a dress form for displaying clothing articles the main parts of which can be independently driven in a properly coordinate way.

Within the scope of the above mentioned aim,a main object of the present invention is to provide a dress form in which the head and trunk can be independently rotated about a vertical axis.

Another object of the present invention is to provide such a dress form or dummy which is adapted to rotate on a supporting base pedestal.

According to one aspect of the present invention, the above mentioned aim and objects,as well as yet other objects which will become more apparent hereinafter,are achieved by a dress form or dummy for displaying clothing articles,characterized in that said dummy comprises a trunk rotatably mounted on the bottom portion of the dummy body and provided with arms and forearms and head,driving means for independently driving said arms,forearms and head,an interexchangeable storage card electronic circuit for controlling said driving means,said trunk being removably mounted on said bottom portion of said dummy body,said bottom portion being rotatably supported on a dummy supporting pedestal.

## BRIEF DESCRIPTION OF THE DRAWINGS

Further characteristics and advantages of the dummy according to the present invention will become more apparent from the following detailed description of a preferred,though not exclusive,embodiment thereof,which is illustrated,by way of an indicative but not limitative example.in the figures of the accompanying drawings.in which :

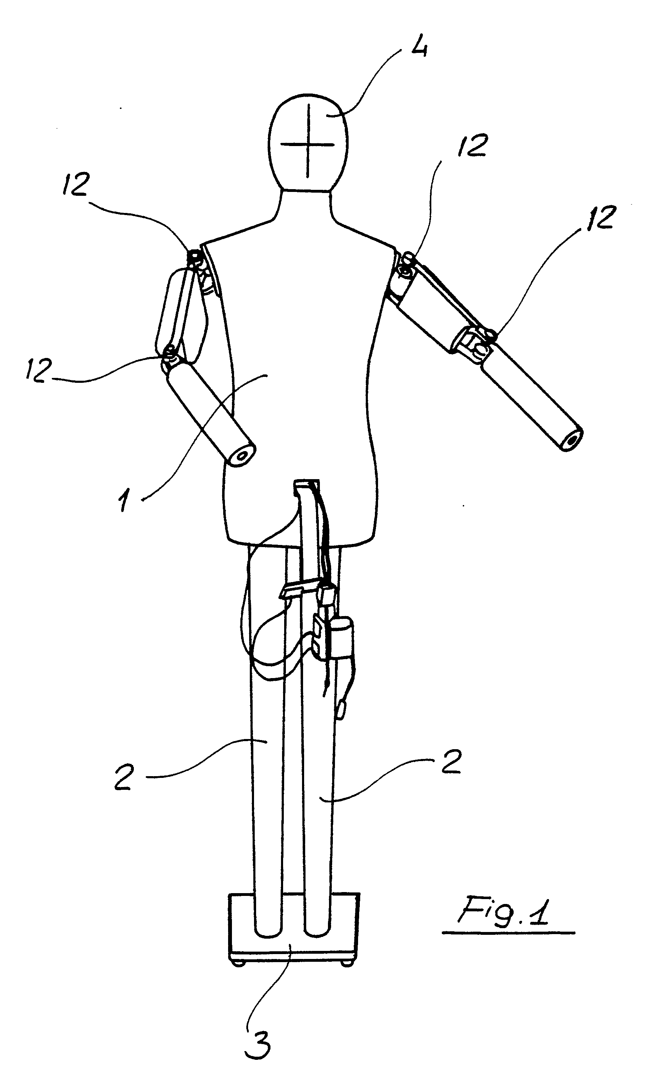

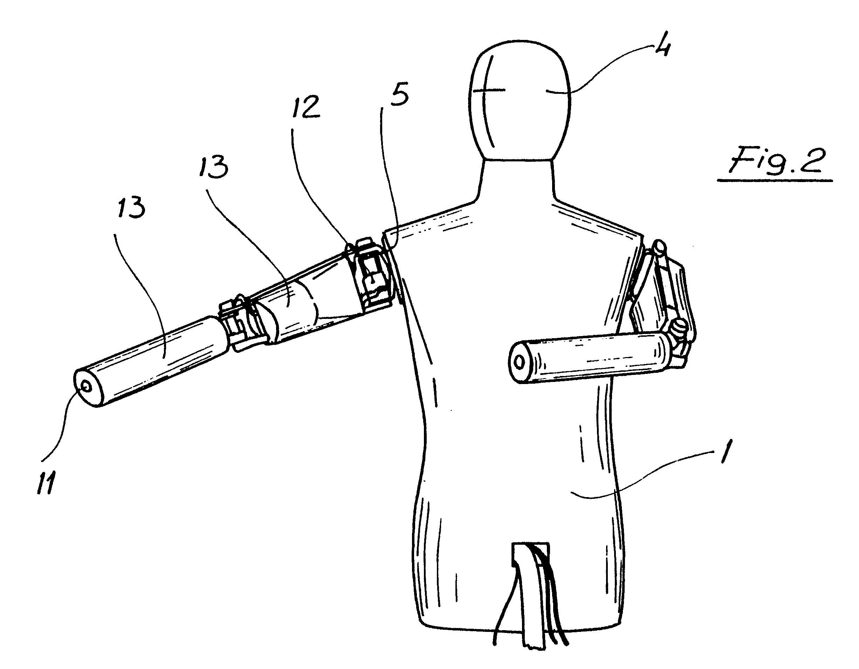

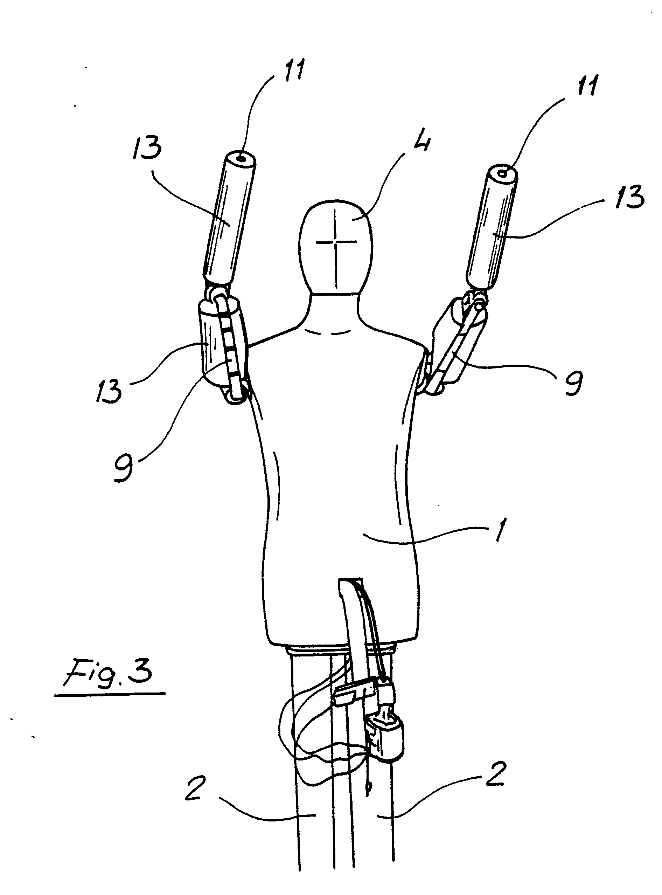

FIGURES 1,2 and 3 are schematic views illustrating the dummy according to the present invention with the dummy arms and head in different positions;

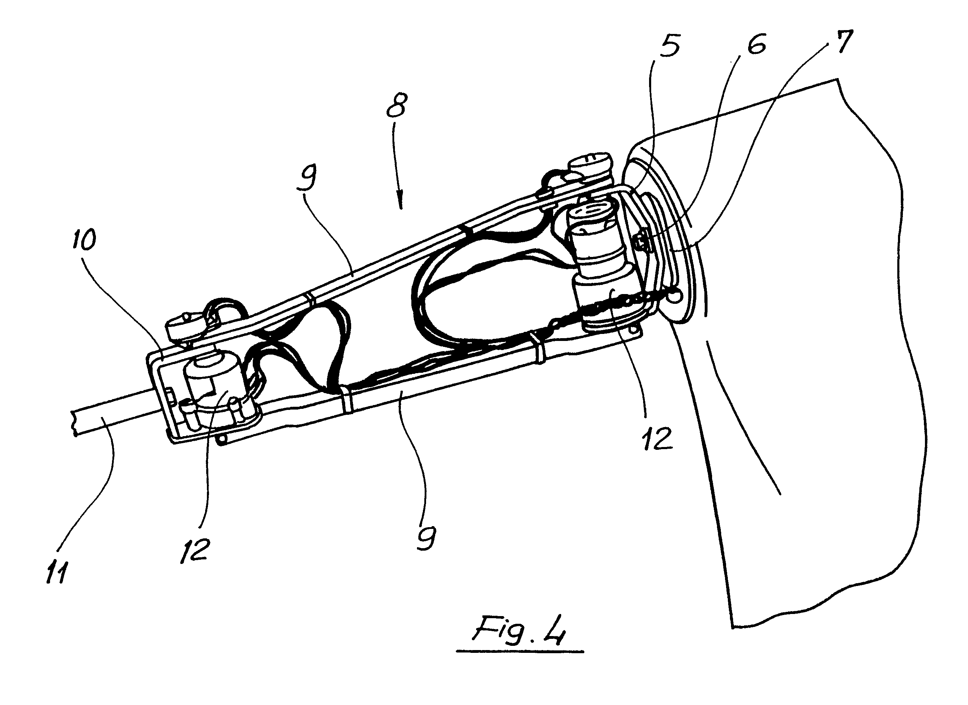

FIGURE 4 is a detail view illustrating the construction of a dummy arm;

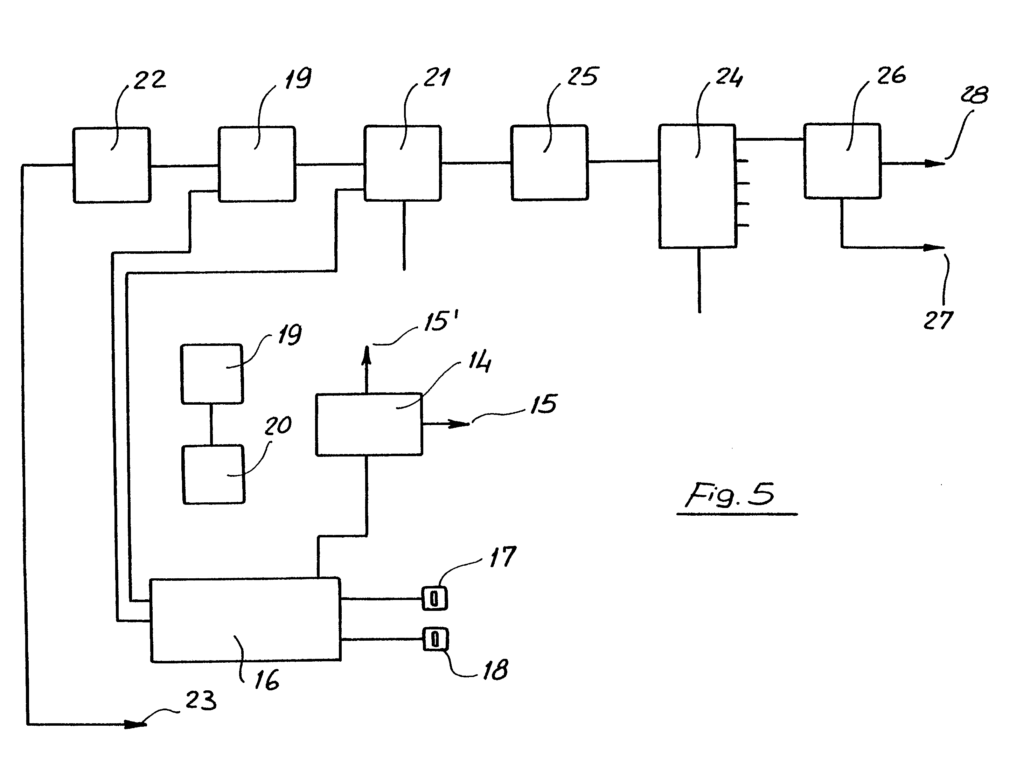

FIGURE 5 illustrates a bloc diagram of a control circuit included in the dummy according to the present invention for controlling the independent movements of the movable parts of the dummy.

## DESCRIPTION OF THE PREFERRED EMBODIMENT

With reference to the figures of the accompanying drawings,the dummy for dynamically displaying dress articles according to the present invention essentially comprises a shaped body 1,of human trunk configuration, which is rotatably mounted on a supporting plate (not shown)from the bottom of which two tubular elements 2 extend,which define corresponding leg members.

More specifically,said tubular elements comprise two rigidly coupled portions.with the top portions being rigid with said plate and the bottom portions being mounted on a pedestal 3 which is rotatably mounted on a supporting base ( not specifically shown ).

The trunk 1,in turn,bears a head construction 4 which is adapted to turn about a vertical axis.

The dummy body supports moreover.at positions corresponding to the arm attachement regions,bracket members 5 which can turn about an axis 6 perpendicular to a supporting plate 7.

Each said bracket pivotably bears a frame

structure,overall indicated at the reference number 8 and formed by two small rods 9.

These rods,in turn,are pivoted,at the opposite ends thereof,to a respective further bracket 10,which perpendicularly supports a tubular small rod 11 adapted to define a forearm.

The mutual displacements of the dummy arms, forearms,trunk and head are obtained,if desired through transmission gears,by suitable driving means which preferably comprise servo-motors 12.

These driving means,in particular,are controlled by a suitable control circuit driven by an easily interexchangeable storage or memory card.

Thus,as it should be apparent,it will be possible to easily change,depending on contingent requirements, the displacement sequence of the individual parts of the dummy.

Moreover it will be possible to drive the several movable parts of a plurality of dummies arranged in a shop window with suitably coordinate movements.

In this connection,it should be pointed out that the memory cards will be so programmed as to allow the dummy to assume one or more fixed position,with respect to the top limbs,so as to facilitate the dress ing operation.

It is to be moreover pointed out that the top limbs can be advantageously lined by wadding material 13,such as,preferably any suitable foamed plastic material.

The driving servo-motors will be controlled by an electronic circuit,power supplied through a relay 14,with input at 15 and output at 15',and comprising a fixed locating system 16 controlled by an on switching elements 17 and a keyboard 18,so as to set the desired position of the movable parts of the dummy and the dressing positions thereof.

Said system 16,more specifically,is coupled to a x10 counter 19 which is controlled by a scanning oscillator 20 and an EPROM 21 coupled to one another.

As shown,the x10 counter 19 is coupled to a movement rate oscillator 22 which provides at the output 23 thereof a timing signal for timing the movements of other possible dummies.

Between the EPROM and multiple-output bloc 24,the outputs of which correspond to the number of the memory programmed movements,there is arranged a D/A converter 25.

Downstream of the bloc 24,moreover,there are arranged a plurality of comparators 26 controlled by potentiometers 27 and controlling,through the output 28,corresponding servo-motors.

It should be apparent to those skilled in the art that the provision of the power supply relay 14 will allow the top limbs of the dummy to assume,as the dummy is switched off,a stored position in order to protect said top limbs from possible impacts.

The dummy,if desired,can also be provided with a rotary wrist,which would be driven by devices like those which have been already disclosed.

While the invention has been disclosed and illustrated with reference to a preferred embodiment thereof,it should be apparent that the disclosed embodiment is susceptible to several modifications and variations all of which will come within the spirit and scope of the appended claims.

## Claims

1- A dummy for dynamically displaying cloth articles, characterized in that said dummy comprises a trunk rotatably mounted on a bottom portion of a dummy body and provided with arms,forearms and a head,driving means for independently driving said arms,forearms and head, an interexchangeable storage card electronic circuit for controlling said driving means,said trunk being removably mounted on said bottom portion of said dummy body,said bottom portion being rotatably supported on a dummy supporting pedestal.

2- A dummy,according to claim 1,characterized in that said said trunk is rotatably mounted on a plate from a bottom portion of which there extend two leg tubular elements including two fixedly coupled upper and lower portions, with said upper portion being rigid with said plate and said lower portion being coupled to said pedestal.

3- A dummy according to claim 1,characterized in that said head is supported on said trunk so as to rotate about a vertical axis,said trunk further bearing,at a zone of attachment of said arms,bracket members rotatable about an axis perpendicular to a supporting plate.

4- A dummy according to claim 3,characterized in that each said bracket member pivotably supports a frame including two pivoted rods,said rods being articulated to further bracket members which perpendicularly bear a forearm defining tubular rod.

5- A dummy according to claim 1,characterized in that said driving means comprise servomotors.

6- A dummy according to claim 1,characterized in that said arms are coated by a foamed plastic material.

7- A dummy according to claim 1,characterized in that said electronic circuit comprises a power supply relay and a fixed locating system coupled to a x 10 counter and an EPROM memory,said x10 counter being controlled by a movement rate oscillator providing at an output thereof a dummy timing signal.

8- A dummy according to claim 7,characterized in that said electronic circuit comprises,between said EPROM memory and a multiple output component bloc a D/A converter, downstream of said multiple output bloc there being provided a plurality of comparators controlled by potentiometers and controlling said servomotors.

9- A dummy according to claim 7, characterized in that said power supply relay is adapted to operate so as to cause said arms to be brought to a stored position as said dummy is electrically switched off.

10- A dummy, characterized in that at least one of said arms comprises a rotary wrist.

*Fig.1*

Fig.2

Fig.3

Fig.4

EP 0 399 962 A1

Fig. 5

EP 0 399 962 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-1249990 (THE SYCAMORES) <br> * the whole document * <br> --- | 1-6, 10 | A47F8/00 <br> G05B19/35 |
| A | US-A-4759302 (BROTHER) <br> * the whole document * <br> --- | 1, 7-9 | |
| A | US-A-4752021 (COHEN) <br> * column 1, line 55 - column 2, line 25; figures 2, 5 * <br> * column 2, line 45 - column 3, line 43 * <br> --- | 1, 6 | |
| A | DE-A-1949613 (PAVAN) <br> * pages 3 - 6; figures * <br> --- | 1, 5 | |
| A | PATENT ABSTRACTS OF JAPAN <br> vol. 4, no. 118 (P-24) 22 August 80, <br> & JP-A-55 074604 (NACHI FUJIKOSHI CORP) 05 June 80, <br> * the whole document * <br> ----- | 1, 7-9 | |

TECHNICAL FIELDS SEARCHED (Int. Cl.5)

A47F
G05B

The present search report has been drawn up for all claims

| Place of search | Date of completion of the search | Examiner |
|---|---|---|
| THE HAGUE | 06 SEPTEMBER 1990 | DE GROOT R.K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                    
& : member of the same patent family, corresponding document

EPO FORM 1503 03.82 (P0401)